# EUROPEAN PATENT SPECIFICATION

(11) **EP 2 704 995 B1**
(45) Date of publication and mention of the grant of the patent: **19.08.2020**
(21) Application number: 12720274.5
(22) Date of filing: 04.05.2012
(51) Int. Cl.: C02F 1/00, B01D 35/30, A47J 31/60, A47J 31/06

(54) **WATER TREATMENT APPARATUS**
VORRICHTUNG ZUR WASSERAUFBEREITUNG
APPAREIL DE TRAITEMENT D'EAU

(30) Priority: 04.05.2011 GB 201107426
(43) Date of publication of application: 12.03.2014
(60) Divisional application: 15159479.3
(73) Proprietor: Strix Limited, Ronaldsway, Isle of Man IM9 2RG (GB)
(72) Inventor: HOWIE, Duncan, Adelaide 5066 South Australia (AU)
(74) Representative: Dehns
(86) International application number: PCT/GB2012/050986
(87) International publication number: WO 2012/150466

(56) References cited:
- EP-A1- 2 130 799
- WO-A1-98/05401
- WO-A1-2006/003350
- WO-A1-2010/034735
- WO-A1-2010/115477
- WO-A2-2004/014519
- WO-A2-2004/014519
- WO-A2-2004/014801
- DE-A1- 3 535 679
- DE-A1- 19 915 829
- GB-A- 2 346 568
- JP-A- 2004 230 335
- JP-A- 2009 125 662
- US-A- 5 811 004
- US-A- 6 103 114
- US-A1- 2006 163 148
- US-A1- 2007 227 955
- US-A1- 2007 227 959
- US-A1- 2007 246 421
- US-A1- 2007 284 296
- US-B1- 6 254 768
- US-B1- 6 638 426

## Description

The present invention relates to water treatment apparatus, more particularly to domestic water treatment cartridges.

Such products are widely known and are used to improve the taste and odour of domestic drinking water. The cartridge typically contains a granular treatment medium such as an ionic exchange medium, activated carbon or charcoal, minerals and mixtures of these. The treatment medium is retained within the cartridge by grilles or meshes provided at the upper and lower ends of the cartridge. Additionally or alternatively, ceramic filtration media may be contained within the cartridge. Water entering through one or more inlets at an upper end of the cartridge percolates through the treatment medium under gravity before exiting through one or more outlets at a lower end of the cartridge. As compared to an in-line water treatment system, where water is pumped through the apparatus, the flow through a gravity feed cartridge is determined solely by the size of the flow inlet(s)/outlet(s), the pressure head of water and the flow resistance of the treatment medium.

Often the cartridge is mounted in or to a hopper into which tap water is introduced, the treated water that passes out of the cartridge being collected by a vessel below. The collection vessel may simply be a jug or bottle from which the treated water is dispensed, or it may be part of a water cooling appliance, steam generating appliance or water heating vessel such as a kettle or beverage maker or the like.

The present invention seeks to provide a water treatment cartridge which can be used in any of the above contexts.

Different hoppers may be designed for a water treatment cartridge to be mounted in different ways. In one example a cartridge is designed to sit inside a hopper, with a recess in the base of the cartridge cooperating with an inwardly protruding bore of the hopper so as to define the position of the cartridge and the flow cross-section from the cartridge outlet(s) to the outlet bore of the hopper. Such a design is intended to restrict the outflow of water into the collection vessel, after the water has percolated through the cartridge. Water in the hopper is prevented from circumventing the cartridge by a seal extending around the periphery of the outwardly facing surface of the cartridge. In other examples such a cartridge with a peripheral seal may be secured in a cut-out or the like in the base of a hopper so as to depend downwardly. In another example a cartridge is designed to be mounted below an outflow opening of a hopper or other water receiving part of an appliance to depend downwardly, e.g. by a bayonet style fitting rather than a peripheral seal. The cartridge may be provided with mounting lugs at its upper end for this purpose, for example as seen in WO 2004/014519. Cartridges of this type are sold by Strix Limited under the Aqua Optima™ brand.

Consumers can be frustrated that one type of hopper or appliance is only designed for use with cartridges having a particular style of mounting and that cartridges are not available with a universal fit.

From a first aspect the present invention provides a water treatment cartridge as claimed in claim 1.

It will be appreciated that a cartridge provided with both a mounting part and an outer seal can be used in a variety of different hoppers. In particular, a cartridge in accordance with the invention may either be fitted below a hopper having an outflow opening or fitted inside a hopper having an inwardly facing surface against which the seal can bear. This is an entirely novel proposal as compared to conventional cartridges that are designed to be mounted exclusively in one manner or the other. Thus it will be seen that such cartridges provide flexibility in their use and enable a more universal fit with vessels and appliances that take treated water.

It will be understood that the mounting part and the seal are two mutually independent features of the cartridge, thereby enabling the cartridge to be mounted in two different ways i.e. either secured using the mounting part or secured using the seal.

The mounting part of the water treatment cartridge may be a separate attachment, but preferably it is integrally provided. Preferably the mounting part is located on or by an upper portion of the cartridge. The mounting part could comprise any suitable mounting means, e.g. a screw fitting or a latch fitting, but preferably the mounting part comprises a bayonet fitting.

The mounting part comprises a pair of mounting lugs that enable the cartridge to be rotated into position under a hopper of the type having an outflow opening in the base. Of course more than two mounting lugs may be provided as desired, for example to form a tighter fit. Each mounting lug may be chamfered such that as the mounting lug is rotated onto a receiving surface, the chamfer acts to cam the cartridge into sealing engagement with the hopper. The cartridge may-further comprises a sealing surface, preferably a circular sealing surface, arranged radially inwardly of the mounting lugs. The sealing surface is preferably on an inwardly facing surface of the cartridge. For example, the sealing surface may be provided by the inwardly facing wall of a channel formed in the upper portion of the cartridge. The channel may be at least partly annular. While the mounting lugs mount the cartridge in a bayonet type fitting to a hopper, the sealing surface may engage with a downwardly depending wall of the hopper that has a seal mounted on its outwardly facing surface. Cartridges having such a mounting part are described in the Applicant's International patent applications WO 2004/014801 and WO 2004/014519.

The water treatment cartridge may have any shape, for example to fit a particular design of hopper, but in one set of embodiments the cartridge is cylindrical with an oval shaped base, i.e. the cartridge has a major axis and a minor axis in a horizontal cross-section. In this set of embodiments the side walls are generally straight and substantially vertical. In such embodiments the mounting lugs, may be at the upper end of the cartridge and generally aligned with the major axis of the cartridge.

The water treatment cartridge comprises inlet(s), e.g. one or more inlets, in its upper surface, i.e. the opposite end of the cartridge to the base where outlet(s) allow for the outflow of treated water. The inlet(s) are provided radially inward of the mounting part and radially inward of the sealing surface provided in conjunction with the mounting part. This means that once the cartridge is mounted in position below an outlet opening of a hopper, all of the water from the hopper must pass through the inlet(s) into the cartridge in order to escape.

The seal on an outwardly facing surface of the cartridge extends around the whole periphery of the cartridge, e.g. a sealing rim. This can ensure that all the water poured into the hopper has to pass through the cartridge inlet(s) and prevents any water bypassing the cartridge so that all of the water is treated.

The seal is arranged below one or more inlet(s) provided in an upper part of the cartridge and above one or more outlet(s) provided in a lower part of the cartridge.

It can be important to ensure that all of the water from a hopper is treated by passing through the cartridge before entering a collection vessel or other part of the appliance. In some parts of the world it is not safe to drink water that has not been treated. Some appliances may rely on water being treated for optimal performance. For example, water may be treated to remove mineral species such as calcium that would otherwise result in a build up of scale in the appliance, especially when the water is to be heated, e.g. to make beverages and/or to generate steam. It can also be important to ensure that all of the water is drained from the hopper as the hopper volume may be designed for the vessel or appliance that is fed by the cartridge.

The Applicant has recognised that when a cartridge as described above allows for different types of mounting, the inlet(s) to the cartridge may not always be provided in the best position to ensure that all the water in the hopper can enter the cartridge. In particular, when a mounting part is provided on an upper surface of the cartridge, radially outward of the inlet(s) to the cartridge, then the seal on an outwardly facing surface of the cartridge is below the mounting part e.g. around the side walls of the cartridge. Furthermore, the seal is preferably not provided directly beneath the mounting part so that there is room for the mounting part, e.g. mounting lugs, to engage with the hopper without interference. Accordingly the seal e.g. a sealing rim around the cartridge is provided on an outwardly facing surface of the cartridge that is spaced from the mounting part therebelow. When such a cartridge is mounted so as to depend downwardly from an outlet opening of a hopper then all the water in the hopper will be above the inlet(s) and can drain through the cartridge. On the other hand, when such a cartridge is mounted inside a hopper with its surface seal acting to secure it in position then water may collect below the mounting part in the area above the seal but below the inlet(s). The water that pools in this area can not drain through the inlet(s) and remains untreated in the hopper.

The Applicant has devised a novel feature to overcome the problems outlined above. In a preferred set of embodiments the cartridge is provided with first inlet means in its upper surface and second inlet means in a side surface, above the surface seal, the second inlet means comprising a valve. In one set of embodiments the valve may be a one way flow valve arranged such that water can flow into the cartridge through the second inlet means but can not flow out. This means that water entering the cartridge through the first inlet means, arranged above the second inlet means, does not escape through the lower inlet(s) in the side of the cartridge but must flow down through the treatment medium to the outlet(s) in the base. When the cartridge is mounted such that untreated water pools below its upper surface then water can pass into the cartridge through the second inlet means, in the direction of the valve, so that both the first and second inlets provide for an inflow. While such a one way valve can solve the problems associated with mounting a cartridge in or to different types of hoppers, it does not allow for selective operation of the valve and its flow direction.

In one set of embodiments the valve may be selectively operable, preferably enabling the second inlet means to be selectively closed. Preferably the valve is biased so that the second inlet means is normally open unless the valve is operated. The open valve may allow for the inflow and/or outflow of fluid. It will be understood that the first inlet means can provide the primary inflow of water to the cartridge. When the cartridge is mounted in a hopper using its surface seal, the second inlet means (with the valve open) can ensure that water does not pool below the upper surface of the cartridge and all the water in the hopper can drain into the cartridge. Furthermore, the second inlet means can advantageously assist with releasing air from inside the cartridge while water is flowing in through the first and/or second inlet means. The Applicant has recognised that there may be an advantage in the first inlet means substantially providing for the inflow of water (through an upper surface of the cartridge) while the second inlet means substantially provides for the outflow of air (through a side surface of the cartridge).

The valve can be used to selectively close the second inlet means when the cartridge is fitted below a hopper using its mounting part, so that in this mounting situation water can enter the cartridge through the first inlet means but can not escape through the second inlet means before it has been fully treated. In both mounting situations, all of the water that enters the cartridge is constrained to pass through a treatment medium before exiting through one or more outlet(s) in its base. The valve arrangement therefore ensures that water is properly drained from a hopper and treated regardless of the way in which the cartridge is mounted.

A further benefit of providing a water treatment cartridge with two sets of inlets, one set being selectively closeable by a valve, is that the flow rate into the cartridge can be adjusted by opening or closing the valve. It has been recognised that using the cartridge itself to control the rate of flow through a treatment medium can be advantageous as it can ensure consistent treatment times regardless of how or where the cartridge is fitted. Where the cartridge itself does not determine the flow rate, on the other hand, but instead its cooperation with a hopper is used to set the flow rate, then this can vary depending on how the cartridge is fitted, for example how far the cartridge is pushed into the hopper. In some cases the cartridge may be fitted into a hopper having an outlet valve that determines the outflow of treated water. However the degree to which such a valve is actually opened by interaction with the cartridge can result in variations in the flow rate.

It is therefore preferable for the flow rate through the inlet(s) and outlet(s) of the cartridge to be selected, relative to each other and to the flow rate through the treatment medium, so as to control the flow of liquid through the treatment medium so as to obtain a consistent flow time through the filter. Such an arrangement is described in the Applicant's International patent application WO 01/47399. Providing an inlet means comprising a selectively closeable valve can help to achieve this aim.

It will be appreciated that using the valve to selectively open or close the second inlet means allows the total inlet area of the cartridge to be adjusted, for example to help control the flow rate therethrough. Furthermore the second inlet means may be selectively opened or closed to assist with the release of air while water is percolating through the cartridge. The valve may be arranged such that it is normally open or closed. Preferably the valve is biased to its normally open or closed position such that it will return to that position after being operated. The second inlet means may be provided in the same surface of the cartridge as the first inlet means, for example both in an upper surface. However, in preferred embodiments the second inlet means is provided in a side surface of the cartridge while the first inlet means is provided in an upper surface. An advantageous effect of the second inlet means having a different orientation to the first inlet means is that water can flow (e.g. substantially vertically) into the cartridge through the first inlet means in an upper surface while air is released via a different route through the second inlet means in a side surface.

There will now be described a preferred set of embodiments. In such embodiments the water treatment cartridge is a gravity feed cartridge that comprises both a mounting part arranged to cooperate with a hopper to allow the cartridge to be secured so as to depend downwardly from an outlet opening of the hopper, and a seal on an outwardly facing surface of the cartridge arranged to cooperate with a hopper to allow the cartridge to be secured therein. It is preferred that the first inlet means is provided radially inwardly of the mounting part and preferably the second inlet means is provided below the mounting part and above the seal, e.g. also in the outwardly facing surface of the cartridge. As mentioned above, preferably the valve is biased so that the second inlet means is normally open unless the valve is operated, e.g. upon using the mounting part to mount the cartridge below a hopper. The biased valve will return to its open position when the cartridge is demounted. A cartridge according to these embodiments advantageously provides for a universal fit with different types of hopper mounting arrangements, while also ensuring that all the water from the hopper can drain through the cartridge regardless of the way it is mounted.

The valve may be operated manually. However it is preferred that the valve is arranged so as to be operated when the cartridge is fitted in or to a water hopper. Accordingly a particular hopper may be provided with actuation means intended to open or close the second inlet means e.g. depending on the design of the hopper and/or any desired flow rate for treatment. The valve may therefore allow the same cartridge to work with a range of different hoppers and associated appliances. The inlet valve can be arranged to be operated by any suitable actuation means provided by or associated with a hopper that feeds water to the cartridge.

The invention therefore extends to a water treatment appliance comprising a hopper for receiving untreated water and a water treatment cartridge as described hereinabove mounted to or in the hopper so as to receive untreated water, wherein the hopper comprises actuations means arranged to operate the or a valve of the or an inlet means of the cartridge so as to open or close the valve when the cartridge is mounted thereto or therein.

The actuation means may be designed for a particular appliance to have the effect of altering or controlling the flow through the inlet means of the cartridge. Thus the same cartridge having a common design may be used in a range of different appliances, with the actuation means specific to an appliance acting to change how water flows into and through the treatment cartridge.

According to the invention, the cartridge comprises a mounting part arranged to cooperate with the hopper to allow the cartridge to be secured so as to depend downwardly from an outlet opening of the hopper. Preferably the appliance comprises a corresponding receiving part for the mounting part, for example a receiving surface for mounting lugs that enables the cartridge to be mounted in a bayonet type fitting. In such embodiments the receiving part is preferably arranged so as to operate the valve, in particular the receiving part may comprise an actuating surface arranged therebelow so as to bear against the valve when the mounting part is received thereon. The actuating surface can act to selectively close the valve when the cartridge is mounted below the hopper. In such a mounting arrangement untreated water can only enter the cartridge through the first inlet means that are open and can not bypass the treatment medium by passing out through the second inlet means that have been closed by operation of the valve. When the cartridge is demounted the valve is preferably biased to return to its open position when no longer in contact with an actuating surface.

The valve for the second inlet means may take any suitable form. Although the valve may be operable to provide for a variable (non-zero) flow rate therethrough, it is preferably a bi-position valve that operates such that the inlet means is either open or closed. A snap action valve may be used. In one set of embodiments the valve comprises an elastic actuator member and a sealing member. The valve is arranged so that pressure applied to the actuator member causes it to flex and actuate the sealing member to close the inlet means. When the pressure is removed the elastic member flexes back to its original position and the sealing member is released from the inlet means. The elastic member may be arranged to be flattened against a side wall of the cartridge when it is flexed.

The invention also extends to a water treatment appliance comprising a hopper for receiving untreated water and a water treatment cartridge as described hereinabove mounted so as to depend downwardly from an outlet opening of the hopper and to receive untreated water therefrom, wherein the hopper comprises actuations means arranged to operate the or a valve of the or an inlet means of the cartridge so as to close the valve when the cartridge is mounted thereto.

The water treatment appliances described above can be a jug or a liquid heating vessel, e.g. a kettle, a coffee maker or other type of heated water dispenser, a steam generating appliance, or a water cooling device.

Some general features will now be described that apply to all embodiments of the invention described above.

The outlet means may be located in any suitable position on the water treatment cartridge, for example in a side wall and/or in the base. There could be any number of outlets provided. In one set of embodiments the cartridge comprises a recess in its base with one outlet located in the recess and at least one further outlet, preferably two further outlets, located away from the recess in the base. Preferably a grille or mesh is arranged inside the cartridge to extend across the outlet means in order to retain treatment particles away from the outlets. The grille or mesh could extend across the base of the cartridge or across each individual outlet. Preferably the grille or mesh is spaced internally from the corresponding outlet(s). The grille or mesh acts to retain the filter material in the body of the water treatment cartridge and to prevent it from clogging the outlet means.

As with the outlet means, the inlet means can include a grille or mesh to prevent foreign bodies passing into and clogging the cartridge, as well as retaining the filter material within the cartridge if it is upturned, e.g. in transit. In one set of embodiments the inlet means and outlet means are arranged so that the flow rate of untreated water into the water treatment cartridge through the inlet means is greater than the flow of treated water through the outlet means. This arrangement causes the water to back up in the cartridge and controls the duration of the water in the cartridge, i.e. the flow rate of water through the cartridge is determined by the number and size of the outlets. Therefore adequate treatment of the water by the filter material in the cartridge is ensured and the filter material in the bottom of the cartridge is less likely to compact.

Preferably the cartridge contains a water treatment medium. The water treatment medium may comprise any suitable medium for removing unwanted components from and/or adding desired components to the water being treated. The water treatment medium preferably comprises water treatment granules comprising ion exchange particles, activated carbon or charcoal particles, minerals, other treatment materials or mixtures thereof. The water treatment medium may comprise ceramic media, for example in the forms of discs. Ceramic filter media can be regenerated by backflushing and/or steam sterilisation, thereby providing the cartridge with a very long service life

Certain preferred embodiments of the invention will now be described, by way of example only, with reference to the accompanying drawings in which:
Fig. 1 is a first isometric view of a water treatment cartridge in accordance with an embodiment of the invention;
Fig. 2 shows a second isometric view of the water treatment cartridge of Fig. 1;
Fig. 3 shows a cross-section of the water treatment cartridge of Figs. 1 and 2;
Fig. 4 shows an isometric view of a water treatment cartridge in accordance with another embodiment of the invention;
Fig. 5 shows a cross-section of the water treatment cartridge of Fig. 4;
Fig. 6 shows a partially cutaway view of the water treatment cartridge of Figs. 1-3 mounted below a hopper;
Fig. 7 shows a cross-section of the cartridge installed below the hopper; and
Fig. 8 shows a cross-section of the cartridge of Figs. 1-3 installed in another type of hopper.

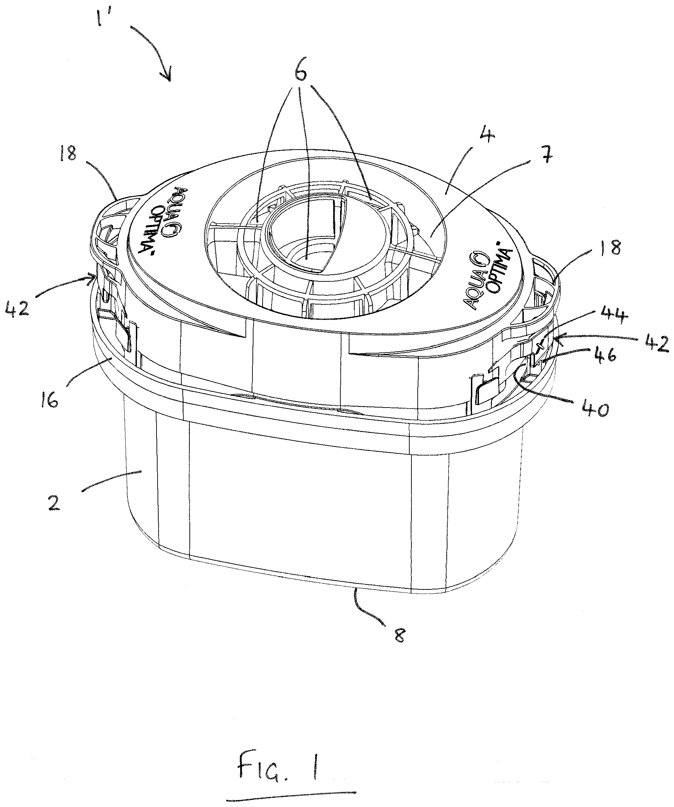

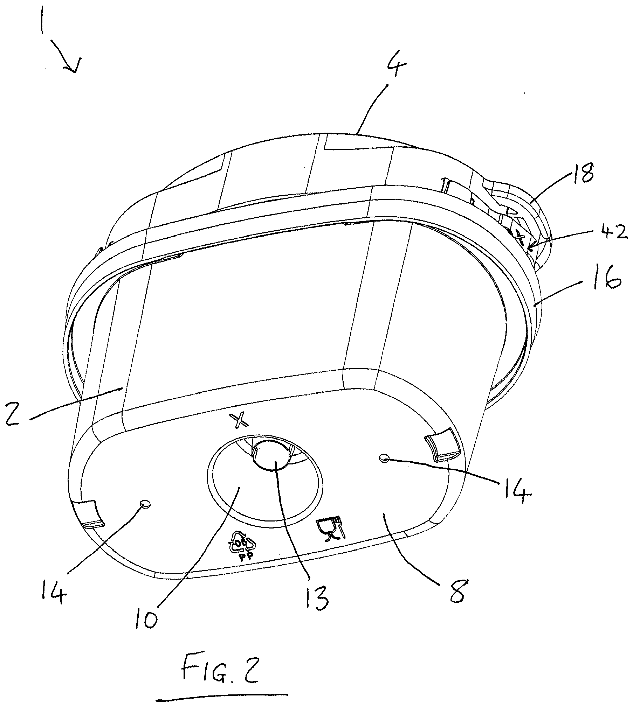

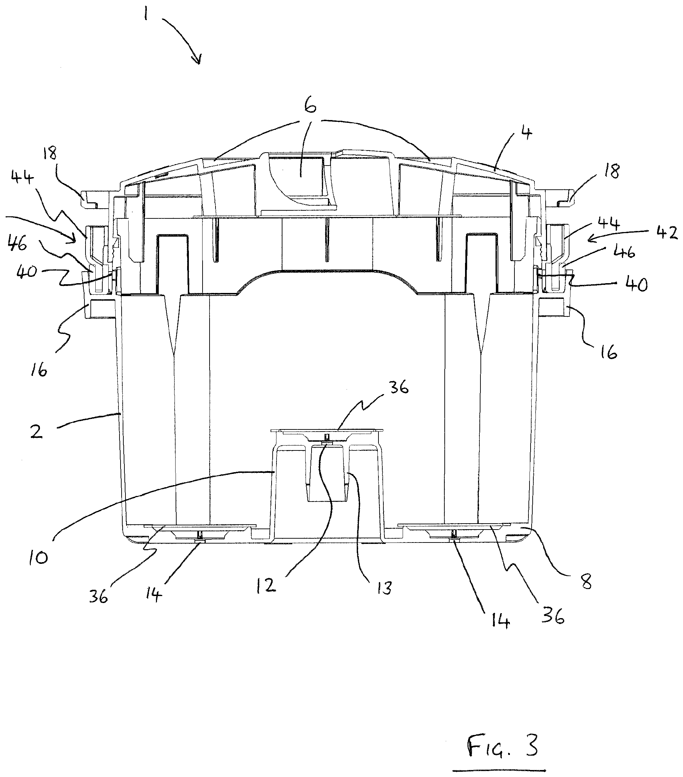

Figs. 1 to 3 show a water treatment cartridge 1 in accordance with an embodiment of the invention. The cartridge 1 comprises a body 2 which is filled with filter material, e.g. activated carbon and an ionic exchange medium. The upper surface 4 of the body 2 has inlets 6 in it to allow water to flow into the cartridge 1, the inlets 6 comprising a grille and mesh which prevent foreign bodies passing into the cartridge 1 and retain the filter material within the body 2 of the cartridge 1. The inlets 6 are provided in a cylindrical recess 7 in the upper surface 4 of the cartridge 1. The base 8 of the cartridge 1 includes a narrow recess 10 that contains a downwardly projecting annular spigot 13 which surrounds an outlet hole 12 (seen in Fig. 3). Two further outlet holes 14 are provided in the base 8 of the cartridge 1. The outlet holes 12, 14 allow treated water to flow out of the cartridge 1.

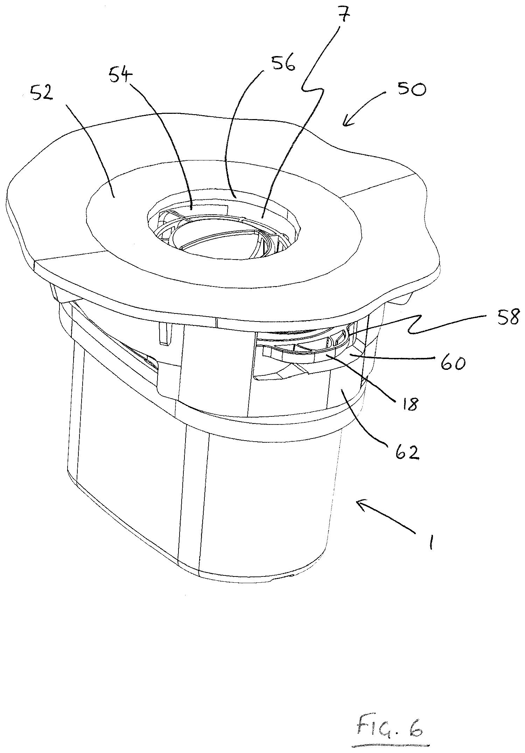

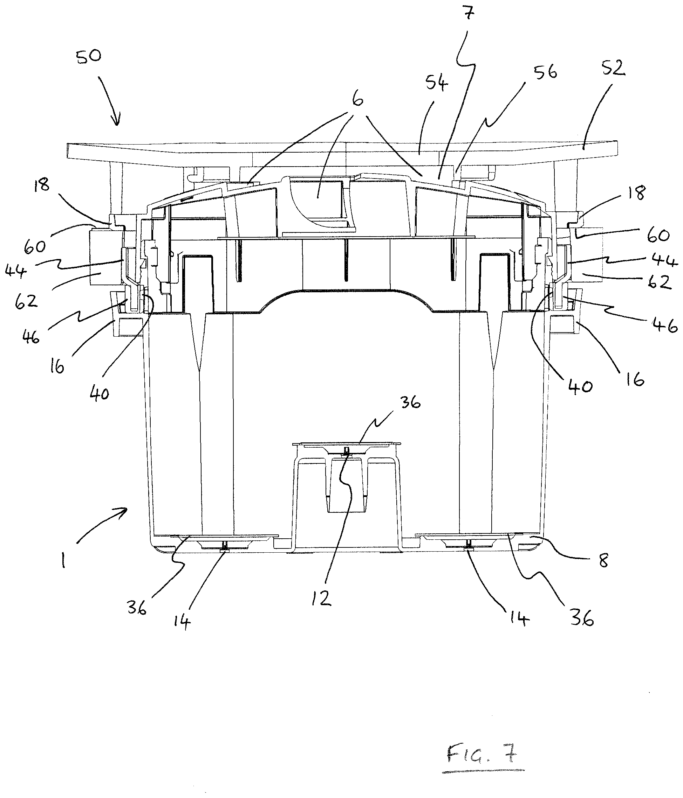

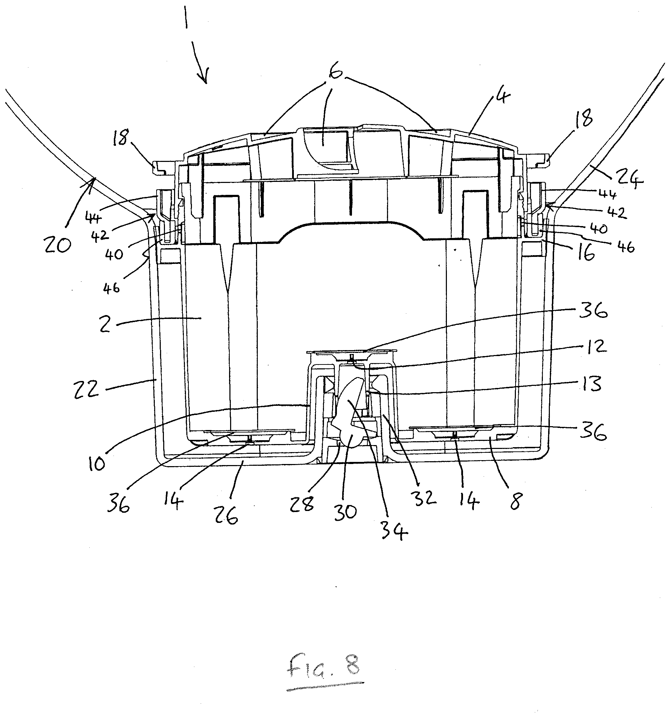

The body 2 of the cartridge 1 further comprises a sealing rim 16 mounted between the upper surface 4 and the base 8 to provide a water tight seal when the cartridge 1 is installed into a hopper of a water treatment appliance (see Fig. 8 for more details). Bayonet mounting lugs 18 are also provided on the body 2 of the cartridge 1, just below the upper surface 4, so that the cartridge 1 can be installed below a hopper so as to depend downwardly therefrom (see Figs. 6 and 7 for more details).

It can be seen from Figs. 1 to 3 that the cartridge 1 also includes a set of side inlets 40 in the outer surface of the body 2, below the mounting lugs 18 and above the sealing rim 16. The side inlets 40 may provide for the inflow of water and the outflow of air. Each side inlet 40 is covered by an actuatable valve 42 comprising a flexible member 44 and a sealing member 46. In this embodiment the sealing member 46 is a U-shaped silicone sleeve pushed onto the lower end of the flexible member 44. Each of the valves 42 is normally biased to an open position so that water pooled around the side of the cartridge 1, above the sealing rim 16, can pass through the inlets 40 into the body of the cartridge 1. The valve 42 can be closed by flattening the flexible member 44 against a side wall of the cartridge 1 so that the seal 46 is pushed against the inlet 40 and seals it closed. The seal member 46 is accommodated inside the sealing rim 16, which conveniently limits its range of lateral movement. The flexible member 44 may be elastic so that it returns to its original position when there is no pressure on the valve 42, thereby moving the seal member 46 away from the inlet 40 and re-opening the inlet 40.

In the cross-sectional view shown in Fig. 3, it can be seen that the outlet holes 12, 14 of the cartridge 1 are covered with disc-shaped meshes 36 which act to retain the filter material within the body 2 of the cartridge 1 to prevent it blocking the outlet holes 12, 14.

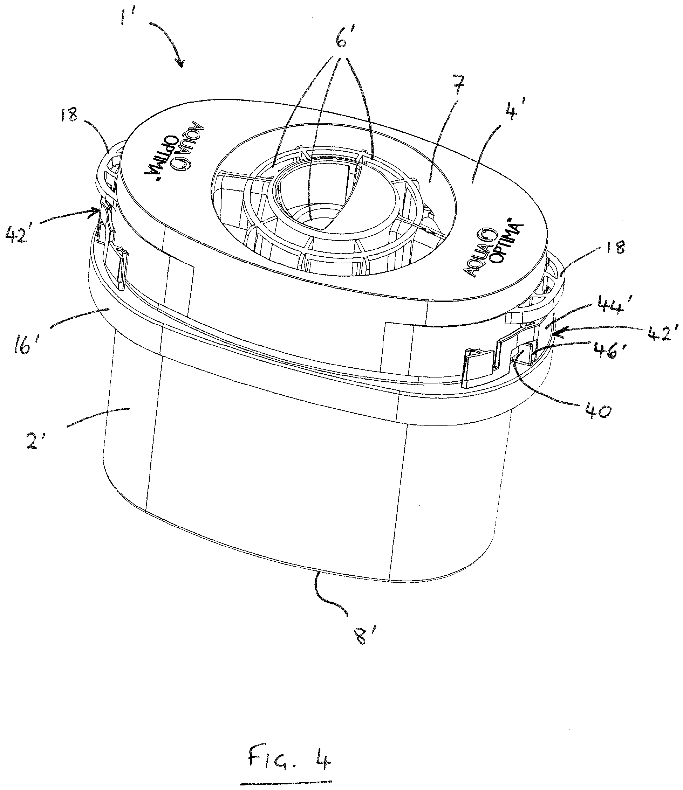

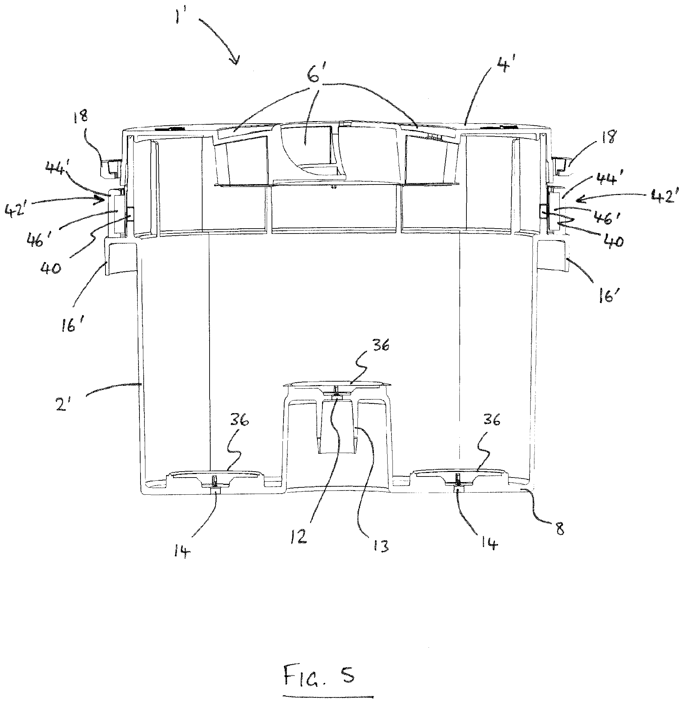

In the further embodiment seen in Figs. 4 and 5 the cartridge 1' is essentially the same as described with respect to Figs. 1-3, except the upper surface 4' of the body 2' is substantially flat rather than being crowned (as seen in Fig. 1). The inlets 6' are still spaced the same distance from the base 8' of the cartridge 1' due to the thickness of the cap providing the upper surface 4'. The side valves 42' have a slightly different design. As is best seen in the cross-sectional view of Fig. 4, the inlets 40 in a side surface of the cartridge 1' are now covered by an actuable valve 42' comprising a flexible member 44' with a sealing member 46' on its inner surface (rather than a U-shaped sleeve). As before, each valve 42' is normally biased to an open position and can be closed by flexing the flexible member 44' inwards to press the sealing member 46' against the inlet(s) 40. The elastic material of the flexible member 44' ensures that it flexes back to open the valve 42' when there is no pressure applied. In this embodiment the sealing rim 16' extends below the side valves 42'.

Figs. 6 and 7 show the water treatment cartridge 1 of Figs. 1-3 installed below a hopper 50 of a water treatment appliance, e.g. a water filter jug, using the bayonet fitting provided by the mounting lugs 18. The hopper 50 is partially cutaway so that only the base part is seen. The base 52 of the hopper 50 includes an outlet opening 54 for untreated water. The outlet opening 54 has a downwardly depending wall 56 provided with a seal on its outer surface that bears against the radially inwardly facing wall of the cylindrical recess 7 in the upper surface 4 of the cartridge 1. Untreated water that passes out of the hopper 50 through the opening 54 is therefore constrained to fill the cylindrical recess 7 in the upper surface 4 of the cartridge 1 and pass through the main inlets 6.

The hopper base 52 includes a pair of side openings 58 that receive the mounting lugs 18 of the cartridge 1. To mount the cartridge 1, the lugs 18 are inserted at the wider end of the openings 58 and the cartridge 1 is rotated so that the lugs 18 are pushed along an inclined receiving surface 60 until resistance provides a tight fit. The cartridge 1 is then suspended below the hopper 50. Below the side openings 58 that receive the mounting lugs 18 of the cartridge 1, the base 52 of the hopper 50 also includes side actuators 62 that act to operate the valves 42 over the side inlets 40. As is best seen from comparing Fig. 7 with Fig. 3, when the cartridge 1 is mounted under the hopper 50 the side actuators 62 push against the flexible valve members 44 and flatten them against the side wall of the cartridge body 2, which pushes the seal members 46 across the side inlets 40. The side inlets 40 are therefore selectively closed when the cartridge 1 is mounted below such a hopper 50, so that water entering through the main inlets 6 can not exit through the side inlets 40. All of the water entering the cartridge 1 must therefore filter down through the treatment medium before exiting through the outlets 12, 14 in the base 8.

Fig. 8 shows a cross-sectional view of the water treatment cartridge 1 shown in Figs. 1 to 3, when installed in another type of hopper 20 of a water treatment appliance, e.g. a water filter jug.

The hopper 20 comprises a lower portion 22 with slightly tapering walls into which the cartridge 1 is inserted, and an upper concave portion 24 into which water is poured, so that it can be filtered by passing through the cartridge 1 and the filter material that it contains. The base 26 of the lower portion 24 of the hopper 20 comprises an outlet 28. The outlet 28 comprises a valve 30 within an inwardly projecting protrusion 32.

The valve 30 includes a tiltable valve member 34 which has to be opened to allow water to flow out of the hopper 20 through the outlet 28. The recess 10 and the annular spigot 13 on the base 8 of the cartridge 1 are shaped to accommodate the inward protrusion 32 of the hopper outlet 28.

The cartridge 1' seen in Figs. 4-5 may be mounted below the hopper 50 or in the hopper 20 in the same way as is described above for the cartridge 1'.

In operation the water treatment cartridge 1 is inserted into the lower portion 22 of the hopper 20, into the position shown in Fig. 8. The sealing rim 16 of the cartridge 1 engages with the inner wall of the lower portion 22 of the hopper 20 to create a water tight seal between the hopper 20 and the cartridge 1, thereby ensuring that all the water poured into the upper portion 24 of the hopper 20 passes through the cartridge 1. The dimensions of the sealing rim 16 are designed to control the depth to which the cartridge 1 can be inserted into the lower portion 22 since the latter has slightly tapering walls.

When mounted in this type of hopper 20, it is only the sealing rim 16 that bears against a wall portion 22 of the hopper 20 and there is no contact with the valves 42. Thus it can be seen that the flexible valve members 44 are spaced away from the cartridge body 2 and the seal members 46 are in the outside of the sealing rim 16, spaced from the inlets 40. Water in the lowest part of the hopper 20, below the level of the main inlets 6, can therefore pass into the cartridge 1 through the side inlets 40.

Also when the cartridge 1 is inserted into this type of hopper 20, the spigot 13 contacts the sloping shoulder at the top of the valve member 34 to tilt it away from its resting position, thereby allowing water to flow out of the hopper 20. Apart from the sealing rim 16, this is the only point of contact between the cartridge 1 and the hopper 20.

Once the cartridge 1 has been installed into the hopper 20, untreated water can be poured into the upper portion 24 of the hopper 20. From here it flows into the cartridge through the inlets 6, 40 of the cartridge 1, and percolates through the filter material. The treated water then flows out of the outlets 12, 14 of the cartridge.

Water flowing out of the central outlet hole 12 within the spigot 13 in the recess 10 in the cartridge 1 bypasses the lower portion 22 of the hopper 20, i.e. the hole at the top of the inwardly projecting protrusion 32, and therefore only has to flow through the outlet 28 by the valve 30 in the bottom of the hopper 20 to then be collected in the water treatment appliance for further use.

Water flowing out of the other outlet holes 14 in the base 8 of the cartridge 1 is first collected in the lower portion 22 of the hopper 20 from where it then flows along the annular gap between the inwardly projecting protrusion 32 of the hopper 20 and the recess 10 in the base 8 of the cartridge 1 to allow it to pass first through the hole in the top of the inwardly projecting protrusion 32 and then through the outlet 28 by the valve 30 in the bottom of the hopper 20 to again be collected in the water treatment appliance for further use.

It will be appreciated by those skilled in the art that many variations and modifications to the embodiments described above may be made within the scope of the various aspects of the invention set out in the claims. For example any number of additional outlets in the body of the cartridge below the sealing rim could be provided, e.g. in the side walls.

## Claims

1. A water treatment cartridge (1;1') comprising:
a mounting part (18) arranged to cooperate with a hopper (50) in use to allow the cartridge to be secured so as to depend downwardly from an outlet opening (54) of the hopper (50), wherein the mounting part comprises mounting lugs (18) that enable the cartridge (1;1') to be rotated into position;
a sealing surface arranged radially inwardly of the mounting lugs (18);
one or more inlet(s) (6; 6') in the upper surface of the cartridge, the inlet(s) provided radially inward of the mounting part (18) and radially inward of the sealing surface such that, once the cartridge is mounted in position below the outlet opening (54) of the hopper (50), all of the water from the hopper (50) must pass through the inlet(s) (6; 6') into the cartridge in order to escape; and
a seal (16) on an outwardly facing surface of the cartridge spaced from the mounting part (18), below the mounting part, and arranged to cooperate with a hopper (20) in use to allow the cartridge to be secured therein
wherein the seal (16) extends around the whole periphery of the cartridge, and wherein the seal (16) is arranged below the one or more inlet(s) (6;6') and above one or more outlet(s) (12,14) provided in a lower part (8:8') of the cartridge.

2. A water treatment cartridge (1;1') as claimed in claim 1, wherein the mounting part (18) is integrally provided and/or wherein the mounting part (18) is located on an upper portion (4;4') of the cartridge.

3. A water treatment cartridge (1;1') as claimed in claim 1 or 2, wherein the sealing surface is a circular sealing surface.

4. A water treatment cartridge (1;1') as claimed in any preceding claim, wherein the cartridge is provided with second inlet means (40) in a side surface, above the seal (16), the second inlet means (40) comprising a valve (42;42').

5. A water treatment cartridge (1;1') as claimed in claim 4, wherein the valve (42;42') is a one-way flow valve arranged such that water can flow into the cartridge through the second inlet means (40) but not out.

6. A water treatment cartridge (1;1') as claimed in claim 4 or 5, wherein the valve (42;42') is biased so that the second inlet means (40) is normally open unless the valve is operated.

7. A water treatment cartridge (1;1') as claimed in claim 69, wherein the valve (42;42') is arranged to selectively close the second inlet means when the cartridge is fitted below a hopper (50) using its mounting part (18).

8. A water treatment appliance comprising a hopper (50;20) for receiving untreated water, and a water treatment cartridge (1:1') as claimed in any of claims 4-7 mounted to or in the hopper so as to receive untreated water, wherein the hopper comprises actuations means (62) arranged to operate the valve (42;42') of the second inlet means (40) so as to open or close the valve when the cartridge is mounted thereto or therein.

## Patentansprüche

1. Wasseraufbereitungskartusche (1;1'), umfassend:
ein Montageteil (18), das eingerichtet ist, mit einem Trichter (50) in Verwendung zusammenzuwirken, um der Kartusche zu erlauben, gesichert zu werden, um abwärts von einer Auslassöffnung (54) des Trichters (50) zu hängen, wobei das Montageteil Montagelaschen (18) umfasst, die der Kartusche (1;1') ermöglichen, in Position gedreht zu werden;
eine Dichtungsoberfläche, die radial innerhalb der Montagelaschen (18) eingerichtet ist;
einen Einlass oder mehrere Einlässe (6;6') in der oberen Oberfläche der Kartusche, wobei der Einlass (die Einlässe) radial innerhalb des Montageteils (18) und radial innerhalb der Dichtungsoberfläche bereitgestellt sind, sodass, sobald die Kartusche in Position unterhalb der Auslassöffnung (54) des Trichters (50) montiert ist, das Gesamte Wasser von dem Trichter (50) durch den Einlass (die Einlässe) (6;6') hindurch in die Kartusche muss, um zu entweichen; und
eine Dichtung (16) an einer nach außen zeigenden Oberfläche der Kartusche, die von dem Montageteil (18) beabstandet ist, unterhalb des Montageteils, und eingerichtet, mit einem Trichter (20) in Verwendung zusammenzuwirken, um der Kartusche zu erlauben, darin gesichert zu werden,
wobei die Dichtung (16) sich um den gesamten Umfang der Kartusche erstreckt und wobei die Dichtung (16) unterhalb des einen Einlasses oder der mehreren Einlässe (6;6') und oberhalb eines Einlasses oder mehrerer Einlässe (12, 14) angeordnet ist, die in einem unteren Teil (8;8') der Kartusche bereitgestellt sind.

2. Wasseraufbereitungskartusche (1;1') nach Anspruch 1, wobei das Montageteil (18) ganzheitlich bereitgestellt ist und/oder wobei das Montageteil (18) an einem oberen Abschnitt (4; 4') der Kartusche liegt.

3. Wasseraufbereitungskartusche (1;1') nach Anspruch 1 oder 2, wobei die Dichtungsoberfläche eine ringförmige Dichtungsoberfläche ist.

4. Wasseraufbereitungskartusche (1;1') nach einem vorstehenden Anspruch, wobei die Kartusche mit einem zweiten Einlassmittel (40) in einer Seitenoberfläche, über der Dichtung (16), bereitgestellt ist, wobei das zweite Einlassmittel (40) ein Ventil (42;42') umfasst.

5. Wasseraufbereitungskartusche (1;1') nach Anspruch 4, wobei das Ventil (42;42') ein Einweg-Strömungsventil ist, das so angeordnet ist, dass Wasser durch das zweite Einlassmittel (40) in die Kartusche fließen kann, nicht aber heraus.

6. Wasseraufbereitungskartusche (1;1') nach Anspruch 4 oder 5, wobei das Ventil (42;42') vorgespannt ist, sodass das zweite Einlassmittel (40) normalerweise offen ist, außer das Ventil ist in Betrieb.

7. Wasseraufbereitungskartusche (1;1') nach Anspruch 6, wobei das Ventil (42;42') eingerichtet ist, das zweite Einlassmittel selektiv zu schließen, wenn die Kartusche unterhalb eines Trichters (50) unter Verwendung ihres Montageteils (18) eingesetzt ist.

8. Wasseraufbereitungsvorrichtung, umfassend einen Trichter (50;20) zum Aufnehmen von nicht aufbereitetem Wasser, und eine Wasseraufbereitungskartusche (1;1') nach einem der Ansprüche 4-7, die an oder in dem Trichter montiert ist, um nicht aufbereitetes Wasser aufzunehmen, wobei der Trichter Betätigungsmittel (62) umfasst, die eingerichtet sind, um das Ventil (42;42') des zweiten Einlassmittels (40) zu betätigen, um das Ventil zu öffnen oder zu schließen, wenn die Kartusche daran oder darin montiert ist.

## Revendications

1. Cartouche de traitement d'eau (1 ; 1'), comprenant :
une partie de montage (18) agencée pour coopérer avec une trémie (50) en utilisation pour permettre à la cartouche d'être fixée de manière à pendre vers le bas depuis une ouverture de sortie (54) de la trémie (50), dans laquelle la partie de montage comprend des pattes de montage (18) qui permettent à la cartouche (1 ; 1') d'être tournée en position ;
une surface d'étanchéité agencée radialement vers l'intérieur par rapport aux pattes de montage (18) ;
une ou plusieurs entrées (6 ; 6') dans la surface supérieure de la cartouche, l'/les entrée(s) étant fournie(s) radialement vers l'intérieur par rapport à la partie de montage (18) et radialement vers l'intérieur par rapport à la surface d'étanchéité de sorte que, une fois que la cartouche est montée en position en dessous de l'ouverture de sortie (54) de la trémie (50), toute l'eau de la trémie (50) doit traverser l'/les entrée(s) (6 ; 6') jusque dans la cartouche afin de s'échapper ; et
un joint d'étanchéité (16) sur une surface orientée vers l'extérieur de la cartouche espacée de la partie de montage (18), en dessous de la partie de montage, et agencé pour coopérer avec une trémie (20) en utilisation pour permettre à la cartouche d'être fixée dans celle-ci,
dans laquelle le joint d'étanchéité (16) s'étend autour de toute la périphérie de la cartouche, et dans laquelle le joint d'étanchéité (16) est agencé en dessous des une ou plusieurs entrées (6 ; 6') et au-dessus des une ou plusieurs sorties (12, 14) fournies dans une partie inférieure (8 ; 8') de la cartouche.

2. Cartouche de traitement d'eau (1;1') selon la revendication 1, dans laquelle la partie de montage (18) est intégralement fournie et/ou dans laquelle la partie de montage (18) est située sur une portion supérieure (4 ; 4') de la cartouche.

3. Cartouche de traitement d'eau (1;1') selon la revendication 1 ou 2, dans laquelle la surface d'étanchéité est une surface d'étanchéité circulaire.

4. Cartouche de traitement d'eau (1; 1') selon l'une quelconque des revendications précédentes, dans laquelle la cartouche est pourvue d'un second moyen d'entrée (40) dans une surface latérale, au-dessus du joint d'étanchéité (16), le second moyen d'entrée (40) comprenant une soupape (42 ; 42').

5. Cartouche de traitement d'eau (1; 1') selon la revendication 4, dans laquelle la soupape (42 ; 42') est une soupape d'écoulement unidirectionnel agencée de sorte que de l'eau puisse s'écouler dans la cartouche à travers le second moyen d'entrée (40) mais ne puisse pas sortir.

6. Cartouche de traitement d'eau (1 ; 1') selon la revendication 4 ou 5, dans laquelle la soupape (42 ; 42') est sollicitée de sorte que le second moyen d'entrée (40) est normalement ouvert sauf si la soupape est en fonctionnement.

7. Cartouche de traitement d'eau (1;1') selon la revendication 6, dans laquelle la soupape (42 ; 42') est agencée pour fermer sélectivement le second moyen d'entrée lorsque la cartouche est ajustée en dessous d'une trémie (50) en utilisant sa partie de montage (18).

8. Appareil de traitement d'eau comprenant une trémie (50; 20) pour recevoir de l'eau non traitée, et une cartouche de traitement d'eau (1 ; 1') selon l'une quelconque des revendications 4 à 7 montée sur ou dans la trémie de manière à recevoir de l'eau non traitée, dans lequel la trémie comprend un moyen d'actionnement (62) agencé pour faire fonctionner la soupape (42 ; 42') du second moyen d'entrée (40) de manière à ouvrir ou fermer la soupape lorsque la cartouche est montée sur celle-ci ou dans celle-ci.
